# EUROPÄISCHE PATENTSCHRIFT

(11) **EP 1 861 772 B1**
(45) Veröffentlichungstag und Bekanntmachung des Hinweises auf die Patenterteilung: **04.06.2014**
(21) Anmeldenummer: 06705927.9
(22) Anmeldetag: 07.02.2006
(51) Int. Cl.: G06F 3/06

(54) **VERFAHREN ZUM ENTFERNEN EINES MASSENSPEICHERSYSTEMS AUS EINEM RECHNERVERBUND SOWIE COMPUTERPROGRAMM-PRODUKT UND RECHNERVERBUND ZUR DURCHFÜHRUNG DES VERFAHRENS**
METHOD FOR REMOVING A MASS STORAGE SYSTEM FROM A COMPUTER NETWORK, AND COMPUTER PROGRAM PRODUCT AND COMPUTER NETWORK FOR CARRYING OUT THE METHOD
PROCEDE POUR RETIRER UN SYSTEME DE MEMOIRE DE MASSE D'UN RESEAU INFORMATIQUE ET PRODUIT-PROGRAMME D'ORDINATEUR ET RESEAU INFORMATIQUE POUR LA MISE EN OEUVRE DUDIT PROCEDE

(30) Priorität: 23.03.2005 DE 102005013502
(43) Veröffentlichungstag der Anmeldung: 05.12.2007
(73) Patentinhaber: Fujitsu Technology Solutions Intellectual Property GmbH, 80807 München (DE)
(72) Erfinder: WERNER, Steffen, 81829 München (DE)
(74) Vertreter: Epping - Hermann - Fischer
(86) Internationale Anmeldenummer: PCT/DE2006/000201
(87) Internationale Veröffentlichungsnummer: WO 2006/099826

(56) Entgegenhaltungen:
- EP-A- 1 130 514
- EP-A- 1 555 604
- WO-A2-2004/097572
- US-A1- 2002 161 855
- US-A1- 2003 115 434
- US-A1- 2005 021 869
- US-A1- 2005 055 402

## Beschreibung

Die Erfindung betrifft ein Verfahren zum Entfernen eines Massenspeichersystems aus einem Rechnerverbund, wobei das Entfernen des Massenspeichersystems im laufenden Betrieb des Rechnerverbundes vorgenommen wird.

Durch die zunehmende Zentralisierung von Rechnerdiensten wachsen die zur Durchführung der Dienste benötigten Rechnersysteme immer weiter an. Häufig wird statt eines einzelnen oder weniger Großrechner ein Verbund mehrerer einfacher Komponentenrechner eingesetzt, der durch Zufügen weiterer Komponentenrechner leicht erweiterbar ist.

Bei solchen Rechnerverbünden ist es bekannt, relativ einfach aufgebaute Komponentenrechner einzusetzen, die die benötigte Rechenleistung und den zugehörigen Hauptspeicher zur Verfügung stellen. Des Weiteren ist es bekannt, speziell eingerichtete Massenspeichersysteme, die große Mengen an Speicherkapazität bereitstellen, in solchen Rechnerverbünden einzusetzen. Beispielsweise eignen sich hierfür RAID-Systeme (Redundant Array of Independent Discs), die die Speicherkapazität mehrerer in das RAID-System eingebauter Magnetplattenspeicher zu einer logischen Speichereinrichtung zusammenfassen, durch die dem Rechnerverbund ein einziges Dateisystem zum Speichern von Daten hochverfügbar bereitgestellt wird. Besonders große Massenspeichersysteme können auch mehrere logische Speichereinrichtungen bzw. Dateisysteme bereitstellen. Dies ist insbesondere dann nötig, wenn die Speicherkapazität des Massenspeichersystems die Größe des Adressraums des verwendeten Dateisystems übersteigt.

US2005/0055402, das als nächstliegender Stand der Technik angesehen ist, offenbart ein Verfahren zum Entfernen eines Massenspeichersystems aus einem Rechnerverbund.

Aus der EP 1 234 226 ist ein Backup- und Archivierungssystem bekannt, bei dem ein Rechnerverbund eingesetzt wird, um Bandlaufwerke zentral für eine Vielzahl von Datenverarbeitungsanlagen bereitzustellen. Das bekannte Archivierungssystem umfasst zum einen Komponentenrechner, die Daten von externen Datenverarbeitungsanlagen entgegennehmen, und zum anderen Komponentenrechner, die die Daten auf Bandkassetten sichern. Um die Effizienz des Systems zu steigern, werden die zu sichernden Daten dabei in einem Dateisystem zwischengespeichert, das von einem oder mehreren Massenspeichersystemen zur Verfügung gestellt wird und von einem weiteren Komponentenrechner verwaltet wird.

In dem beschriebenen Rechnerverbund werden Massenspeichersysteme eingesetzt, die besonders ausfallsicher sind. Beispielsweise können Daten in den einzelnen Massenspeichersystemen redundant auf unterschiedlichen Massenspeichern gesichert werden, sodass beim Ausfall eines Massenspeichers die Daten des jeweils anderen Massenspeichers verwendet werden können.

Trotz der oben beschriebenen Maßnahmen kann es nötig sein, einzelne Massenspeichersysteme aus dem Rechnerverbund zu entfernen, z.B. um einen defekten Massenspeicher gegen einen neuen auszutauschen oder um die Kapazität des Massenspeichersystems zu erweitern. Jedoch stellt ein solches Entfernen eines Massenspeichersystems einen wesentlichen Eingriff in den Aufbau des Rechnerverbundes dar.

Eine einfache Möglichkeit, ein Massenspeichersystem aus einem Rechnerverbund zu entfernen, besteht darin, den gesamten Rechnerverbund herunterzufahren oder auszuschalten. In diesem Zustand können die benötigten Wartungsarbeiten an dem Massenspeichersystem ausgeführt werden. Nach Abschluss der Wartungsarbeiten muss der Rechnerverbund wieder in Betrieb genommen werden. Dabei ist es nachteilhaft, dass alle Dienste, die durch den Rechnerverbund zur Verfügung gestellt werden, während der Ausführung der Wartungsarbeiten nicht zur Verfügung stehen.

Eine andere Möglichkeit besteht darin, einzelne Prozesse, die auf einem oder mehreren Komponentenrechnern ablaufen und auf ein zu entfernendes Massenspeichersystem zugreifen, zu stoppen, geeignete Daten und Metadaten des Massenspeichersystems zu sichern, und die Dateisysteme des Massenspeichersystems dann für weitere Zugriffe zu sperren. Eine Sperrung der Dateisysteme kann unter Unix-Systemen beispielsweise durch Verwendung des Kommandos "umount" vorgenommen werden, das einzelne Massenspeichersysteme aus einem netzwerkweiten Dateisystem entfernt. Anschließend können die Wartungsarbeiten an dem Massenspeichersystem durchgeführt werden, ohne den gesamten Rechnerverbund auszuschalten oder herunterzufahren.

Nach Abschluss der Wartungsarbeiten müssen die durch das Massenspeichersystem bereitgestellten Dateisysteme zunächst wieder in dem Rechnerverbund zur Verfügung gestellt werden, beispielsweise durch Verwendung des Unix-Kommandos "mount". Eventuell durch die Wartungsarbeiten geänderte Daten müssen unter Verwendung der gesicherten Daten und Metadaten wieder hergestellt werden, so dass für die gestoppten Prozesse kein Unterschied zum Zustand vor Durchführung der Wartungsarbeiten erkennbar ist. Als letzter Schritt müssen die gestoppten Prozesse wieder gestartet werden. Dabei kann es erforderlich sein, einen oder mehrere der Komponentenrechner neu zu starten.

Durch das Stoppen einzelner Prozesse kann eine Komplettabschaltung des Rechnerverbundes vermieden werden. Jedoch stehen auch hier während der Wartungsarbeiten nicht die Rechnerdienste zur Verfügung, die normalerweise durch einen der gestoppten Prozesse bereitgestellt werden. Des weiteren ist eine solche Vorgehensweise sehr komplex, so dass die ausgeführten Wartungsarbeiten leicht einen Fehler in dem Rechnerverbund verursachen können.

Der Erfindung liegt daher die Aufgabe zu Grunde, ein Verfahren zu beschreiben, durch das das Entfernen eines Massenspeichersystems aus dem laufenden Rechnerverbund ohne Störung der durch den Rechnerverbund bereitgestellten Rechnerdienste ermöglicht wird.

Die Aufgabe wird erfindungsgemäß durch ein Verfahren gemäß Patentanspruch 1 gelöst.

Erfindungsgemäß werden Daten von Prozessen, die auf den Komponentenrechnern ablaufen, auf Dateisysteme verschoben, die von anderen Massenspeichersystemen zur Verfügung gestellt werden. Dazu wird zunächst ein Massenspeichersystem ausgewählt, dass aus einem Rechnerverbund entfernt werden soll. Anschließend werden alle Dateisysteme, die von dem ausgewählten Massenspeichersystem bereitgestellt werden, gekennzeichnet. Bevor ein Entfernen des Massenspeichersystems aus dem Rechnerverbund möglich ist, müssen alle gekennzeichneten Dateisysteme von der Benutzung durch Prozesse des Rechnerverbundes freigestellt werden. Dazu wird zum einen verhindert, dass neue Zugriffe von Prozessen auf eines der gekennzeichneten Dateisysteme zugelassen werden. Des Weiteren werden Daten, die bereits auf einem gekennzeichneten Dateisystem enthalten sind, auf ein anderes Dateisystem kopiert. Zugriffe auf die bereits bestehenden Daten werden dabei auf die kopierten Daten umgeleitet.

Es ist wichtig für das erfindungsgemäße Verfahren, dass alle Zugriffe auf Daten des Rechnerverbundes durch eine zentrale Zugriffssteuerung vorgenommen werden. Die Zugriffssteuerung stellt das Freistellen der gekennzeichneten Dateisysteme sicher und lenkt Zugriffe auf nichtgekennzeichnete Dateisysteme um. Ein Komponentenrechner, der auf die Daten des Massenspeichersystems zugreift, merkt nichts von dessen Freistellung. Die Rechnerdienste, die durch den Rechnerverbund bereitgestellt werden, werden ebenfalls nicht durch den Eingriff gestört. Nach Abschluss des Freistellens aller gekennzeichneten Dateisysteme erfolgt eine Signalisierung, dass das ausgewählte Massenspeichersystem aus dem Rechnerverbund entfernt werden kann.

Es ist vorteilhaft, dass ein erfindungsgemäß aus dem Rechnerverbund entferntes Massenspeichersystem wieder in den Rechnerverbund aufgenommen werden kann. Im Anschluss an eventuell ausgeführte Wartungsarbeiten an dem Massenspeichersystem wird dem Rechnerverbund mitgeteilt, dass das ausgewählte Massenspeichersystem wieder verwendet werden soll. Nach Sicherstellen der Betriebsbereitschaft des wieder zu verwendenden Massenspeichersystems wird der Zugriffssteuerung signalisiert, dass die Dateisysteme, die von dem Massenspeichersystem zur Verfügung gestellt werden, wieder zum Ablegen von Daten zur Verfügung stehen.

Dabei kann die Zugriffssteuerung beispielsweise eine Strategie vorsehen, nach der neue Zugriffe auf Dateisysteme des wieder zu verwendenden Massenspeichersystems umgelenkt werden. Alternativ ist es auch möglich, Daten, die bereits vor Entfernen des ausgewählten Massenspeichersystems auf den von ihm bereitgestellten Dateisystemen gespeichert waren, auf die vom ausgewählten Massenspeichersystem zur Verfügung gestellten Dateisysteme zurück zu kopieren. Dadurch kann beispielsweise eine gleichmäßige Belastung aller Massenspeichersysteme des Rechnerverbundes erreicht werden.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
- Figur 1: eine schematische Darstellung eines Rechnerverbundes zur Durchführung des erfindungsgemäßen Verfahrens,
- Figur 2: eine schematische Darstellung von Prozessen, die über eine Zugriffssteuerung auf verschiedene Dateisysteme zugreifen,
- Figur 3: ein Ablaufdiagramm für das erfindungsgemäße Verfahren.

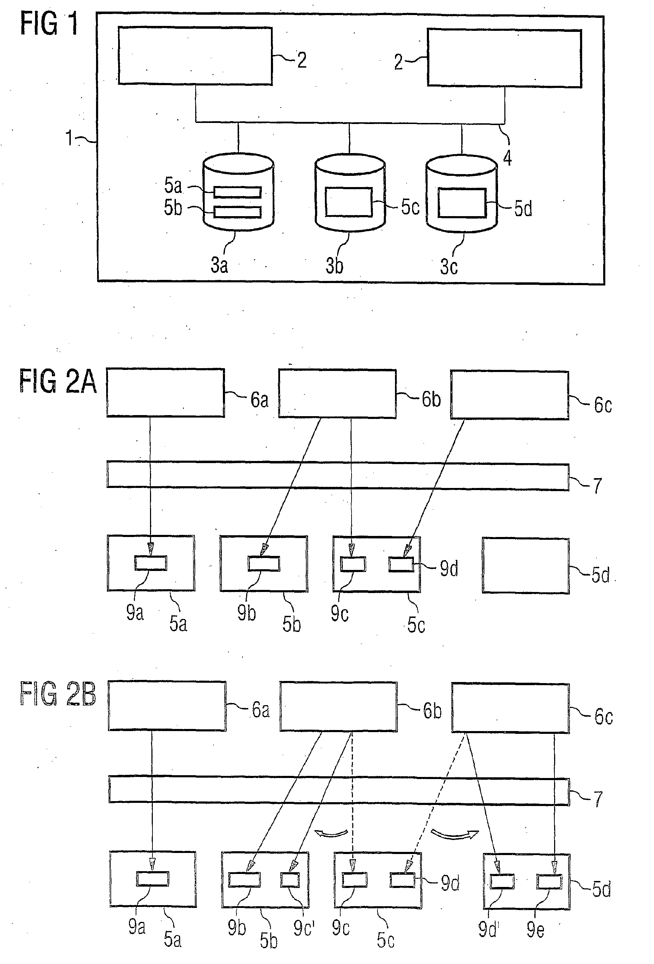

Figur 1 zeigt die schematische Darstellung eines Rechnerverbundes 1. Der Rechnerverbund 1 umfasst zwei Komponentenrechner 2 sowie drei Massenspeichersysteme 3. Die Massenspeichersysteme 3 umfassen jeweils ein oder mehrere Dateisysteme 5. Die Komponentenrechner 2 und die Massenspeichersysteme 3 sind über ein Netzwerk 4 miteinander verbunden. Als Netzwerk 4 wird dabei bevorzugt ein besonders leistungsfähiger Netzwerktyp wie z.B. ein sogenanntes Storage Area Network (SAN) eingesetzt, das es erlaubt, weit voneinander entfernt aufgestellte Komponenten 2 und 3 mit hoher Geschwindigkeit zu verbinden. Im Ausführungsbeispiel handelt es sich bei dem Netzwerk 4 um ein sogenanntes Fiberchannel-Netzwerk.

Figur 2 zeigt eine schematische Darstellung der Datenzugriffe eines Ausführungsbeispiels gemäß dem erfindungsgemäßen Verfahren. Figur 2A zeigt, dass in dem Ausführungsbeispiel drei Prozesse 6 über eine gemeine Zugriffssteuerung 7 auf vier Dateisysteme 5 zugreifen. Dabei greift ein erster Prozess 6a auf erste Daten 9a auf dem Dateisystem 5a zu, ein zweiter Prozess 6b greift auf zweite Daten 9b auf dem Dateisystem 5b sowie auf dritte Daten 9c auf dem Dateisystem 5c zu und ein dritter Prozess 6c greift auf vierte Daten 9d auf dem Dateisystem 5c zu.

Im Ausführungsbeispiel soll das Massenspeichersystem 3b aus dem Rechnerverbund 1 entfernt werden. Das Massenspeichersystem 3b stellt ein einziges Dateisystem 5c zur Verfügung.

In Figur 2B wurde das Dateisystem 5c durch die Zugriffssteuerung 7 freigestellt. Dazu wurden die Daten 9c, die von dem Prozess 6b benutzt werden, von dem Dateisystem 5c auf das Dateisystem 5b kopiert. Des Weiteren wurden die Daten 9d von dem Dateisystem 5c auf das Dateisystem 5d kopiert. Die Zugriffe der Prozesse 6b bzw. 6c auf die Daten 9c bzw. 9d werden durch die Zugriffssteuerung 7 auf das Dateisystem 5b bzw. 5d umgelenkt. Des Weiteren wurden zusätzliche Daten 9e, auf die der Prozess 6c zugreift, gleich auf dem Dateisystem 5d angelegt, sodass nun keine Zugriffe auf das Dateisystem 5c mehr stattfinden.

In einer Ausgestaltung der Erfindung wartet die Zugriffssteuerung 7 auf das Ende eines Zugriffes der Prozesse 6b bzw. 6c, bevor die Daten 9c bzw. 9d von dem markierten Dateisystem 5c auf das unmarkierte Dateisystem 5b bzw. 5d kopiert werden und eine Umleitung für neue Zugriffe auf die kopierten Daten 9c' bzw. 9d' eingerichtet werden. Dabei kann das Ende eines Zugriffs ausdrücklich durch die Anwendung 6b bzw. 6c bestimmt werden, z.B. durch Schließen der zugehörigen Datei 9c bzw. 9d, oder automatisch durch die Zugriffssteuerung 7 erkannt werden, zum Beispiel nach Erkennen einer vorbestimmten Zeit der Nichtbenutzung.

In einer weiteren Ausgestaltung findet das Umkopieren und Umlenken von Zugriffen während eines bestehenden Datenzugriffs statt. Dies ist insbesondere dann vorteilhaft, wenn ein Prozess 6 sehr umfangreiche Daten 9 einliest, beispielsweise beim Lesen von Daten 9 von einem Datensystem 5, die auf ein Magnetbandlaufwerk zur Datensicherung geschrieben werden sollen. Ein solcher Prozess kann je nach verwendeter Datenmenge und Bandlaufwerk über einen verhältnismäßig langen Zeitraum laufen. Um die zur Freistellung des Massenspeichersystems 3b benötigte Zeit zu verkürzen, werden die Daten 9c und 9d bereits während bestehender Zugriffe auf die Dateisysteme 5b bzw. 5d umkopiert, sodass Zugriffe von langsamen Prozessen 6, transparent auf die kopierten Daten 9c' bzw. 9d' umgeleitet werden können. Alternativ kann ein Prozess 6 auch vorrübergehend von der Zugriffssteuerung 7 angehalten werden, um das Umkopieren der Daten 9c bzw. 9d zu erlauben und eine entsprechende Umleitung einzurichten.

Das Massenspeichersystem 3b, das ausschließlich das freigestellte Dateisystem 5c bereitstellt, kann nun problemlos aus dem Rechnerverbund 1 entfernt werden. Ein Anhalten der Prozesse 6 oder Abschalten der Komponentenrechner 2 ist hierfür nicht nötig.

Die Zugriffssteuerung 7 kann beispielsweise als weiterer Prozess 6 verwirklicht werden, der auf einem oder mehreren der vorhandenen Komponentenrechner 2 abläuft. Natürlich kann auch ein separater Komponentenrechner 2 in den Rechnerverbund 1 integriert werden, der ausschließlich als Zugriffssteuerung 7 dient.

Nach Abschluss von Wartungsarbeiten kann das Massenspeichersystem 3b wieder zu dem Rechnerverbund 1 hinzugefügt werden. Ein Hinzufügen des Massenspeichersystems 3b zu dem Rechnerverbund 1 wird dabei entweder der Zugriffssteuerung 7 explizit mitgeteilt oder durch die Zugriffssteuerung 7 automatisch erkannt.

Beispielsweise kann die Zugriffssteuerung 7 in regelmäßigen Abständen versuchen, auf das Massenspeichersystem 3b zuzugreifen. Ist ein solcher Zugriffsversuch erfolgreich, geht die Zugriffssteuerung 7 davon aus, dass das Massenspeichersystem 3b wieder zur Verfügung steht. Auch das Betätigen eines dafür eingerichteten Bedienelementes, bevorzugt an dem Massenspeichersystem 3b, oder Absetzen eines Kommandos an die Zugriffssteuerung 7, zum Beispiel durch Verwendung einer Steuerkonsole, kann zur Mitteilung der Betriebsbereitschaft des Massenspeichersystems 3b genutzt werden.

Im weiteren Verlauf kann die Zugriffssteuerung 7 neue Anfragen der Prozesse 6 nach zusätzlichem Speicherplatz für Daten 9 dem Massenspeichersystem 5c zuweisen. Auf diese Weise wird das erneut hinzugefügte Massenspeichersystem 5c langsam in den Rechnerverbund 1 integriert, ohne dass dabei ein Umkopieren von Daten 9 nötig ist.

Alternativ können die zuvor verschobenen Daten 9c' sowie 9d' auch von den Dateisystemen 5b bzw. 5d auf das von dem Massenspeichersystem 3b bereitgestellte Dateisystem 5c zurückkopiert werden. Vorteilhafterweise werden von der Zugriffssteuerung 7 nur solche Daten 9 zurückkopiert, die sich nach der Freistellung des Dateisystems 5c verändert haben. Nach Abschluss des Zurückkopierens werden die Zugriffe der Prozesse 6b und 6c auf die Daten 9c bzw. 9d wieder auf das Dateisystem 5c geleitet. Dadurch kann eine gleichmäßige Belastung der Dateisysteme 5 und damit der Massenspeichersysteme 3 erreicht werden.

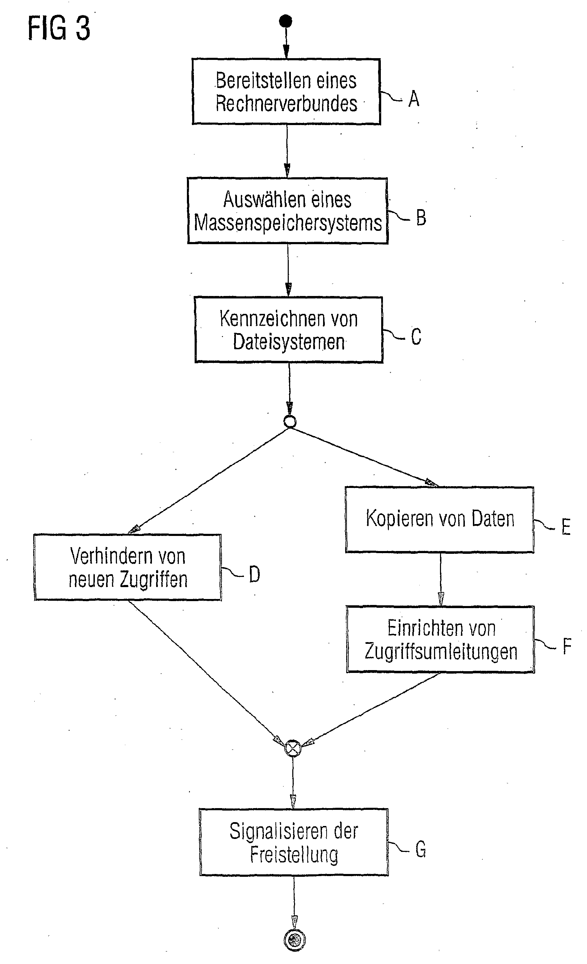

Figur 3 zeigt ein Ablaufdiagramm des erfindungsgemäßen Verfahrens. In einem ersten Schritt A wird ein Rechnerverbund 1 bereitgestellt. Der bereitgestellte Rechnerverbund 1 umfasst dabei wenigstens zwei Massenspeichersysteme 3, die jeweils ein oder mehrere Dateisysteme 5 zur Verfügung stellen, sowie einen oder mehrere Komponentenrechner 2, die über ein Netzwerk 4 miteinander verbunden sind. Der Rechnerverbund 1 umfasst des Weiteren eine zentrale Zugriffssteuerung 7, über die alle Zugriffe von den Komponentenrechnern 2 auf die Dateisysteme 5 der Massenspeichersysteme 3 koordiniert werden.

In einem Schritt B wird eines der Massenspeichersysteme 3 des Rechnerverbundes 1 ausgewählt. Die Auswahl kann beispielsweise manuell durch Betätigen eines an dem Massenspeichersystem 3 untergebrachten Eingabeelementes erfolgen oder durch Absetzen eines Befehles an die Zugriffssteuerung 7. Des Weiteren ist es möglich, ein zu wartendes Massenspeichersystem 3 durch die Zugriffssteuerung 7 automatisch zu erkennen und auszuwählen. Dazu kann beispielsweise ein Massenspeichersystem 3 statistische Informationen über erkannte Fehler, wie die Anzahl der fehlerhaften Sektoren oder Blöcke eines Massenspeichers, oder andere Betriebsparameter, wie die Betriebstemperatur oder die Höhe einer Versorgungsspannung, der Zugriffssteuerung 7 über eine dafür eingerichtete Schnittstelle zur Verfügung stellen. Beim Überschreiten eines vorgegebenen Grenzwertes wird das zugehörige Massenspeichersystem 3 automatisch durch die Zugriffssteuerung 7 ausgewählt.

In einem Schritt C werden alle Dateisysteme 5, die von dem ausgewählten Massenspeichersystem 3 zur Verfügung gestellt werden, gekennzeichnet. Dies kann beispielsweise durch das Markieren oder Löschen eines Tabelleneintrages einer durch die Zugriffssteuerung 7 verwalteten ersten Tabelle erfolgen, in der alle zur Verfügung stehenden Dateisysteme 5 eingetragen sind.

Bei nachfolgenden Anfragen von Prozessen nach neuem Speicherplatz zur Speicherung von Daten 9 an die Zugriffssteuerung 7 werden im Schritt D von der Zugriffssteuerung 7 weitere Zugriffe auf die gekennzeichneten Dateisysteme 5 vermieden. Stattdessen werden solche Anfragen an eines der nicht gekennzeichneten Dateisysteme 5 weitergeleitet. Dabei kann beispielsweise die erste Tabelle der Zugriffssteuerung 7 verwendet werden, um Dateisysteme 5 auszuwählen, die nicht für eine Freistellung gekennzeichnet sind.

In einem Schritt E werden bereits auf dem gekennzeichneten Dateisystem 5 bestehende Daten 9 auf ein anderes Massenspeichersystem 5 kopiert. Nach Abschluss des Kopierens wird in einem Schritt F eine Umleitung für Zugriffe auf die kopierten Daten 9 eingerichtet. Dabei kann die Zugriffssteuerung 7 beispielsweise eine zweite Zuordnungstabelle verwenden, in der für jeden umkopierten Datensatz 9 des gekennzeichneten Dateisystems 5 der kopierte Datensatz 9' auf einem ungekennzeichneten Dateisystem 5 festgehalten wird. Alternativ kann die Zugriffssteuerung auch eine Datenbank verwenden, in der für jeden Satz Daten 9 die aktuell zu verwendende Position auf einem der Datensysteme 5 verzeichnet ist. Das heißt, das jeder Zugriff eines Prozesses 6 auf Daten 9 über die zweite Zuordnungstabelle der Zugriffssteuerung 7 abläuft, auch für solche Daten, die nicht im Zuge einer Freistellung eines Dateisystems 5 umkopiert worden sind. Auch das Einrichten von symbolischen Verknüpfungen, wie sie beispielsweise aus Unix-Dateisystemen bekannt sind, kann zur Umleitung von Zugriffen eingesetzt werden.

In einem letzten Schritt G wird einem Benutzer signalisiert, dass das Massenspeichersystem 3, das im Schritt B ausgewählt wurde, gefahrlos aus dem Rechnerverbund 1 entfernt werden kann.

### Bezugszeichenliste

- 1: Rechnerverbund
- 2: Komponentenrechner
- 3: Massenspeichersystem
- 4: Netzwerk
- 5: Dateisystem
- 6: Prozess
- 7: Zugriffssteuerung
- 9: Daten
- A bis G: Verfahrensschritte

## Patentansprüche

1. Verfahren zum Entfernen eines Massenspeichersystems (3) aus einem Rechnerverbund (1), umfassend die folgenden Schritte:
- Bereitstellen eines Rechnerverbundes (1), umfassend
- eine Vielzahl von Massenspeichersystemen (3) mit einer eindeutigen Kennung, durch die jeweils mindestens ein Dateisystem (5) zum Speichern von Daten (9) bereitgestellt ist,
- mindestens einem Komponentenrechner (2) zum Ausführen eines oder mehrerer Prozesse (6),
- ein Netzwerk (4), das die Vielzahl von Massenspeichersystemen (3) mit dem mindestens einen Komponentenrechner (2) verbindet,
- eine für alle Komponentenrechner (2) zentrale Zugriffssteuerung (7), die alle Zugriffe der Prozesse (6) auf die bereitgestellten Dateisysteme (5) unter Verwendung einer Zuordnungstabelle steuert, in der für jeden Satz Daten (9) die aktuell verwendete Position auf einem der Dateisysteme (5) verzeichnet ist,
- Auswählen eines Massenspeichersystems (3), das aus dem Rechnerverbund (1) entfernt werden soll,
- Kennzeichnen aller Dateisysteme (5), die durch das ausgewählte Massenspeichersystem (3) bereitgestellt werden,
- Freistellen aller gekennzeichneten Dateisysteme (5) durch
- Verhindern von neuen Zugriffen von Prozessen (6) auf die gekennzeichneten Dateisysteme (5) durch die Zugriffssteuerung (7),
- Kopieren der auf den gekennzeichneten Dateisystemen (5) enthaltenen Daten (9) in mindestens zwei Dateisysteme (5), die von einem anderen als dem ausgewählten Massenspeichersystem (3) zur Verfügung gestellt werden und nicht gekennzeichnet sind, wobei Daten (9c, 9d) mindestens eines gekennzeichneten Dateisystems (5c) auf die mindestens zwei nicht gekennzeichneten Dateisysteme (9b, 9d) kopiert werden,
- Umleiten aller Zugriffe durch die Prozesse (6) auf Daten (9) auf dem gekennzeichneten Dateisystem (5) auf die kopierten Daten (9) auf dem ungekennzeichneten Dateisystem (5) durch die Zugriffssteuerung (7), wobei der Eintrag der Daten (9) in der Zuordnungstabelle dahingehend geändert wird, dass er auf die kopierten Daten (9') verweist,
- Signalisieren, dass das ausgewählte Massenspeichersystem (3) aus dem Rechnerverbund (1) entfernt werden kann, nachdem die Freistellung abgeschlossen wurde, sodass kein Prozess (6) mehr auf das ausgewählte Massenspeichersystem (3) zugreift.

2. Verfahren nach Anspruch 1,
**dadurch gekennzeichnet, dass**
die Zugriffssteuerung (7) vor dem Schritt des Kopierens von Daten (9) auf das Ende aller Zugriffe von Prozessen (6) auf diese Daten (9) wartet.

3. Verfahren nach Anspruch 1 oder 2,
das zusätzlich die folgenden Schritte umfasst:
- Festhalten der eindeutigen Kennung des Massenspeichersystems (3), das im Schritt des Auswählens ausgewählt wurde,
- Erkennen, dass das Massenspeichersystem (3) mit der festgehaltenen Kennung einsatzbereit ist nachdem die Signalisierung erfolgt ist,
- Gestatten von neuen Zugriffen von Prozessen (6) auf durch das Massenspeichersystem (3) mit der festgehaltenen Kennung bereitgestellten Dateisystem (5) durch die Zugriffssteuerung (7) nach Erkennen der Einsatzbereitschaft.

4. Verfahren nach Anspruch 3,
bei dem nach dem Schritt des Erkennens der Einsatzbereitschaft, zusätzlich die folgenden Schritte ausgeführt werden:
- Zurückkopieren der auf das oder die anderen Dateisysteme (5) kopierten Daten (9) auf die Dateisysteme (5) des Massenspeichersystems (3) mit der festgehaltenen Kennung, wenn die kopierten Daten (9) seit dem Kopieren geändert worden sind,
- Umleiten von allen Zugriffen durch die Prozesse (6) auf kopierte Daten (9) auf dem oder den anderen Dateisystem (5) auf die zurückkopierten Daten (9) auf den Dateisystemen (5) des Massenspeichersystems (3) mit der festgehaltenen Kennung.

5. Verfahren nach einem der Ansprüche 1 bis 4,
**dadurch gekennzeichnet, dass**
im Schritt des Umleitens die Zugriffssteuerung (7) symbolische Verknüpfungen von den Daten (9) auf die kopierten Daten (9') einrichtet.

6. Verfahren nach einem der Ansprüche 1 bis 4,
**dadurch gekennzeichnet, dass**
die Zugriffssteuerung (7) eine Datenbank mit der Zuordnungstabelle mit den Positionen aller in den Massenspeichersystemen (3) gespeicherten Daten (9) umfasst.

7. Verfahren nach einem der Ansprüche 1 bis 6,
**dadurch gekennzeichnet, dass**
der Rechnerverbund zum Zwischenspeichern von Daten (9) eingerichtet ist, wobei die zwischenzuspeichernden Daten (9) von wenigstens einem ersten Komponentenrechner (2) auf ein Dateisystem (5) eines Massenspeichersystems (3) geschrieben werden und von wenigstens einem zweiten Komponentenrechner (2) von einem Dateisystem (5) eines Massenspeichers (3) gelesen werden.

8. Verfahren nach Anspruch 7,
**dadurch gekennzeichnet, dass**
der Rechnerverbund einen zentralen Datensicherungsdienst bereitstellt, wobei der wenigstens eine erste Komponentenrechner (2), zu sichernde Daten (9) über eine bereitgestellte Schnittstelle entgegennimmt und der wenigstens eine zweite Komponentenrechner (9) die zu sichernden Daten auf ein Bandlaufwerk schreibt.

9. Computerprogramm-Produkt mit Programmcode zur Durchführung eines Verfahrens nach einem der Ansprüche 1 bis 8, wenn der Programmcode auf einem Komponentenrechner (2) des Rechnerverbundes (1) abläuft.

10. Rechnerverbund, umfassend
- wenigstens einen Komponentenrechner (2) zum Ausführen von Prozessen (6),
- wenigstens zwei Massenspeichersysteme (3) zum Speichern von Daten (9),
- wenigstens ein Netzwerk (4) zum Verbinden des wenigstens einen Komponentenrechners (2) mit den wenigstens zwei Massenspeichersystemen (3), und
- eine für alle Komponentenrechner (2) zentrale Zugriffssteuerung (7) zur Koordination aller Zugriffe der Prozesse (6) auf die Daten (9), die zur Durchführung eines Verfahrens nach einem der Ansprüche 1 bis 8 eingerichtet ist.

## Claims

1. Method for removing a mass storage system (3) from a computer network (1), said method comprising the following steps of:
- providing a computer network (1) comprising
- a multiplicity of mass storage systems (3) which have a unique identifier and respectively provide at least one file system (5) for storing data (9),
- at least one component computer (2) for carrying out one or more processes (6),
- a network (4) which connects the multiplicity of mass storage systems (3) to the at least one component computer (2),
- an access controller (7) which is central to all component computers (2) and controls all access by the processes (6) to the file systems (5) which have been provided using an allocation table in which the position in one of the file systems (5) which is currently used is listed for each record of data (9),
- selecting a mass storage system (3) which is intended to be removed from the computer network (1),
- marking all file systems (5) which are provided by the selected mass storage system (3),
- releasing all marked file systems (5) by
- using the access controller (7) to prevent new access by processes (6) to the marked file systems (5),
- copying the data (9) contained in the marked file systems (5) to at least two file systems (5) which are provided by a mass storage system (3) other than that selected and are not marked, data (9c, 9d) of at least one marked file system (5c) being copied to the at least two unmarked file systems (9b, 9d),
- using the access controller (7) to divert all access by the processes (6) to data (9) in the marked file system (5) to the copied data (9) in the file system (5) which has not been marked, the entry of the data (9) in the allocation table being changed to the effect that it refers to the copied data (9'),
- signaling that the selected mass storage system (3) can be removed from the computer network (1) after the releasing operation has been concluded, so that no other process (6) accesses the selected mass storage system (3).

2. Method according to Claim 1,
**characterized in that**
before the step of copying data (9), the access controller (7) waits for the end of all access by processes (6) to these data (9).

3. Method according to Claim 1 or 2,
which additionally comprises the following steps of:
- recording the unique identifier of the mass storage system (3) which was selected in the selection step,
- detecting that the mass storage system (3) having the recorded identifier is ready for operation after signaling,
- using the access controller (7) to allow new access by processes (6) to the file system (5) provided by the mass storage system (3) having the recorded identifier after readiness for operation has been detected.

4. Method according to Claim 3,
in which the following steps are additionally carried out after the step in which readiness for operation is detected:
- the data (9) which have been copied to the other file system(s) (5) are copied back to the file systems (5) of the mass storage system (3) having the recorded identifier if the copied data (9) have been changed since being copied,
- all access by the processes (6) to copied data (9) in the other file system(s) (5) is diverted to the data (9) which have been copied back to the file systems (5) of the mass storage system (3) having the recorded identifier.

5. Method according to one of Claims 1 to 4,
**characterized in that**
the access controller (7) sets up symbolic links between the data (9) and the copied data (9') in the diverting step.

6. Method according to one of Claims 1 to 4,
**characterized in that**
the access controller (7) comprises a database containing the allocation table containing the positions of all data (9) which are stored in the mass storage systems (3).

7. Method according to one of Claims 1 to 6,
**characterized in that**
the computer network is set up to buffer data (9), the data (9) to be buffered being written by at least one first component computer (2) to a file system (5) of a mass storage system (3) and being read by at least one second component computer (2) from a file system (5) of a mass memory (3).

8. Method according to Claim 7,
**characterized in that**
the computer network provides a central data backup service, the at least one first component computer (2) receiving data (9) to be backed up via an interface which has been provided and the at least one second component computer (9) writing the data to be backed up to a tape drive.

9. Computer program product having program code for carrying out a method according to one of Claims 1 to 8 if the program code runs on a component computer (2) of the computer network (1).

10. Computer network comprising
- at least one component computer (2) for carrying out processes (6),
- at least two mass storage systems (3) for storing data (9),
- at least one network (4) for connecting the at least one component computer (2) to the at least two mass storage systems (3), and
- an access controller (7) which is central to all component computers (2), is intended to coordinate all access by the processes (6) to the data (9) and is set up to carry out a method according to one of Claims 1 to 8.

## Revendications

1. Procédé pour retirer un système de mémoire de masse (3) d'un assemblage d'ordinateurs (1), comprenant les étapes suivantes :
- mise à disposition d'un assemblage d'ordinateurs (1) comprenant
- une pluralité de systèmes de mémoire de masse (3) possédant un identifiant univoque, par le biais desquels est à chaque fois mis à disposition au moins un système de fichiers (5) pour l'enregistrement de données (9),
- au moins un ordinateur composant (2) pour exécuter un ou plusieurs processus (6),
- un réseau (4) qui relie la pluralité de systèmes de mémoire de masse (3) avec l'au moins un ordinateur composant (2),
- une commande d'accès (7) centrale pour tous les ordinateurs composants (2), laquelle commande tous les accès des processus (6) aux systèmes de fichiers (5) mis à disposition en utilisant un tableau d'association dans lequel est consignée, pour chaque jeu de données (9), la position actuellement utilisée sur l'un des systèmes de fichiers (5),
- sélection d'un système de mémoire de masse (3) qui doit être retiré de l'assemblage d'ordinateurs (1),
- marquage de tous les systèmes de fichiers (5) qui sont mis à disposition par le système de mémoire de masse (3) sélectionné,
- libération de tous les systèmes de fichiers (5) marqués en
- empêchant de nouveaux accès de processus (6) aux systèmes de fichiers (5) marqués par la commande d'accès (7),
- copiant les données (9) contenues dans les systèmes de fichiers (5) marqués dans au moins deux systèmes de fichiers (5) qui sont mis à disposition par un autre que le système de mémoire de masse (3) sélectionné et ne sont pas marqués, les données (9c, 9d) d'au moins un système de fichiers (5c) marqué étant copiées sur les au moins deux systèmes de fichiers (9b, 9d) non marqués,
- dérivant tous les accès par les processus (6) aux données (9) sur le système de fichiers (5) marqué vers les données (9) copiées sur le système de fichiers (5) non marqué par la commande d'accès (7), l'inscription des données (9) dans le tableau d'association étant modifiée en ce qu'elle renvoie vers les données copiées (9'),
- signalisation que le système de mémoire de masse (3) sélectionné peut être retiré de l'assemblage d'ordinateurs (1) après avoir terminé la libération, de sorte qu'aucun processus (6) n'accède plus au système de mémoire de masse (3) sélectionné.

2. Procédé selon la revendication 1, **caractérisé en ce que** la commande d'accès (7), avant l'étape de copie des données (9), attend la fin de tous les accès de processus (6) à ces données (9).

3. Procédé selon la revendication 1 ou 2, qui comprend en plus les étapes suivantes :
- maintien de l'identifiant univoque du système de mémoire de masse (3) qui a été sélectionné dans l'étape de sélection,
- reconnaissance que le système de mémoire de masse (3) qui possède l'identifiant maintenu est prêt à être utilisé après que la signalisation a été effectuée,
- autorisation de nouveaux accès de processus (6) au système de fichiers (5) mis à disposition par le système de mémoire de masse (3) qui possède l'identifiant maintenu par la commande d'accès (7) après avoir reconnu l'état prêt à être utilisé.

4. Procédé selon la revendication 3, selon lequel les étapes suivantes sont en plus exécutées après l'étape de reconnaissance de l'état prêt à être utilisé :
- recopie des données (9) copiées sur le ou les autres systèmes de fichiers (5) vers les systèmes de fichiers (5) du système de mémoire de masse (3) qui possède l'identifiant maintenu lorsque les données (9) copiées ont été modifiées depuis la copie,
- dérivation de tous les accès par les processus (6) aux données (9) copiées sur le ou les autres systèmes de fichiers (5) vers les données (9) recopiées sur les systèmes de fichiers (5) du système de mémoire de masse (3) qui possède l'identifiant maintenu.

5. Procédé selon l'une des revendications 1 à 4, **caractérisé en ce que** dans l'étape de dérivation, la commande d'accès (7) établit des liaisons symboliques entre les données (9) et les données copiées (9').

6. Procédé selon l'une des revendications 1 à 4, **caractérisé en ce que** la commande d'accès (7) comprend une base de données avec le tableau d'association avec les positions de toutes les données (9) enregistrées dans les systèmes de mémoire de masse (3).

7. Procédé selon l'une des revendications 1 à 6, **caractérisé en ce que** l'assemblage d'ordinateurs est configuré pour la mise en mémoire temporaire de données (9), les données (9) qui doivent être mises en mémoire temporairement étant écrites par au moins un premier ordinateur composant (2) sur un système de fichiers (5) d'un système de mémoire de masse (3) et lues par au moins un deuxième ordinateur composant (2) depuis un système de fichiers (5) d'une mémoire de masse (3).

8. Procédé selon la revendication 7, **caractérisé en ce que** l'assemblage d'ordinateurs met à disposition un service de sauvegarde de données central, l'au moins un premier ordinateur composant (2) prenant en charge les données à sauvegarder (9) par le biais d'une interface mise à disposition et l'au moins un deuxième ordinateur composant (2) écrivant les données à sauvegarder sur un lecteur/enregistreur de bande.

9. Produit programme informatique comprenant un code de programme pour mettre en oeuvre un procédé selon l'une des revendications 1 à 8 lorsque le code de programme est exécuté sur un ordinateur composant (2) de l'assemblage d'ordinateurs (1).

10. Assemblage d'ordinateurs, incluant
- au moins un ordinateur composant (2) pour exécuter des processus (6),
- au moins deux systèmes de mémoire de masse (3) pour enregistrer des données (9),
- au moins un réseau (4) pour connecter l'au moins un ordinateur composant (2) avec les au moins deux systèmes de mémoire de masse (3), et
- une commande d'accès (7) centrale pour tous les ordinateurs composants (2) pour la coordination de tous les accès des processus (6) aux données (9), laquelle est configurée pour mettre en oeuvre un procédé selon l'une des revendications 1 à 8.
